(19) Europäisches Patentamt / European Patent Office / Office européen des brevets

(11) **EP 2 384 234 B1**

(12) **EUROPEAN PATENT SPECIFICATION**

(45) Date of publication and mention
of the grant of the patent:
**31.10.2012 Bulletin 2012/44**

(21) Application number: **09803771.6**

(22) Date of filing: **24.12.2009**

(51) Int Cl.:
**B01D 39/20** (2006.01)    **B01D 29/21** (2006.01)
**C02F 1/00** (2006.01)    **B01D 29/58** (2006.01)

(86) International application number:
**PCT/EP2009/067929**

(87) International publication number:
**WO 2010/086079 (05.08.2010 Gazette 2010/31)**

(54) **A FILTER**

FILTER

FILTRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.01.2009 IN MU01802009
17.04.2009 IN MU10072009**

(43) Date of publication of application:
**09.11.2011 Bulletin 2011/45**

(73) Proprietors:
• **Unilever NV
3013 AL Rotterdam (NL)**
Designated Contracting States:
**AT BE BG CH CZ DE DK EE ES FI FR GR HR HU
IS IT LI LT LU LV MC MK NL NO PL PT RO SE SI
SK SM TR**
• **Unilever PLC
London, Greater London EC4Y 0DY (GB)**
Designated Contracting States:
**CY GB IE MT**

(72) Inventors:
• **DAGAONKAR, Manoj, Vilas
Bangalore
Whitefield 560 066 (IN)**
• **MAJUMDAR, Udayan
Bangalore
Whitefield 560 066 (IN)**
• **WASKAR, Morris
Bangalore
Whitefield 560 066 (IN)**

(74) Representative: **Rosen Jacobson, Frans Lucas M.
Unilever Patent Group
Olivier van Noortlaan 120
3133 AT Vlaardingen (NL)**

(56) References cited:
**EP-A1- 1 900 411    WO-A1-91/05600
US-A- 4 753 728    US-A1- 2004 206 682**

**Description**

**Technical field**

The present invention relates to a filter, particularly to a filter for purification of drinking water under gravity. The invention more particularly relates to a filter for separation of cysts from water to make it suitable for human consumption.

**Background and prior art**

There are many impurities that have been identified in water, which have to be removed in order to make it safe and palatable for human consumption. Such impurities include particulate water insoluble solids, dissolved salts and organic compounds like industrial chemicals, pesticides and its residues and harmful microorganisms like cysts, protozoa, bacteria and virus.

In developed countries and in big cities in the developing countries, there are municipalities that have large industrial scale water purification plants where the water is purified before being piped to individual households. These purification plants treat the raw water with process steps like (i) filtration which removes coarse suspended solids by using sand beds, (ii) flocculation and coagulation to precipitate out finer suspended impurities, (iii) ion-exchange to soften the water and (iv) biocides e.g. halogens like iodine and chlorine to kill the microorganisms.

Such kind of municipal treatment plants are either not present or inadequate in the rural areas of developing countries to meet the potable water requirements of the inhabitants in those areas. In these places, people have to depend on collecting the water directly from lakes, rivers and wells. They collect the water in pots and store them in their individual households. Many people do not purify the water and thus fall prey to many diseases. Some resort to simple methods like filtering with a cloth and/or flocculating with alum to remove suspended solids and boiling to kill the germs. Boiling is an expensive process which requires the use of fuel like coal, wood or oil.

Many sophisticated water purification systems for use in individual households have been have developed and sold in the market. These depend on principles like ultraviolet (UV) irradiation of the water, reverse osmosis etc. The above methods usually require continuous flow of water and continuous supply of electric power. Continuous piped water and power supply on a continuous basis are often not available in the rural areas and many urban areas of developing countries. Hence such purification systems have had limited application and usage in such areas.

US2009/0045106 (Access Business Group) discloses a water purification system which includes a prefilter, a carbon block filter and a microbiological interception (MI) filter. The particle size of the carbon is in the range 140-500 mesh and that of the MI filter is in the range 200-230 mesh. The MI filter is used basically to trap/inactivate microorganisms. The filter assembly may be used to have a flow rate of 0.7-0.9 gallons/min. and hence this is suitable for a on tap water purification systems and not for gravity fed devices. Since input water pressure is low in gravity fed devices, it is not possible to use carbon particles with such low particle size.

Some table top household water purification devices have been developed and sold. One such device is disclosed in WO2004/000732 (Unilever) which claims a gravity fed water purification system comprising a filtration unit adapted to filter particulate material, and a chemical purifying unit containing a chemical purifying agent, in which the chemical purifying unit is housed in a sealed chamber and is in fluid communication with the filtration unit such that water treated by the filtration unit is then gravity fed into the chemical purifying unit and retained therein for a predetermined period, after which the water exits the system via a scavenger means which is adapted to recover leached chemical purifying agent. A device manufactured based on this patent application, also filed by the present applicants, has been sold in the market for some years now. This device requires a large amount of activated carbon moulded in a specific way in order to remove cysts and other particulate to a satisfactory level.

In one attempt to solve this problem the present inventors in an earlier patent application viz. WO2008/028734, disclose a filter comprising spirally wound layers of filtration media comprising non-pleated layer and pleated layer. The fabric filter proposed in WO2008/028734 was not able to bring about sufficient reduction in cost compared to the type of filter reported in WO2004/000732. WO2008/028734, disclose a filter comprising spirally wound layers of filtration media comprising non-pleated layer and pleated layer and hence the organics will not be removed prior to chlorination and thus the chlorine demand will be very high as the chlorine leached from the biocide feeder will get quenched by the presence of organics present in the source water. Further, the maximum amount of cyst that could be removed was limited viz. the log removal of cyst, when the filter was new, was in the range of 1.8 to 3.6 without compromising on the flow rate. However, the cyst removal was found to drop to less than 3 log after some use. The present inventors were looking to provide further increased log removal of cysts while keeping costs low and ensuring desired high flow rate over large literage of flow through the filter.

Further, the present inventors had to ensure that the filter does not choke as often as it does in the filters of the past. In the past, when choked, the filters were usually rejuvenated by either back flushing using a jet of air or washed under agitation in water. However, after a few such rejuvenation cycles, the filter gets irreversibly choked and there is no further flow or the flow rate of filtered water obtained is abysmally slow and the filter has to be replaced. Thus, the problem that has always eluded a satisfactory solution for filtration is to obtain sufficiently high flow rates of water during a filtration operation while ensuring that the desired filtration efficiency in removal of suspended solids and cysts is obtained, all this while keeping the cost low. It was also essential to find a solution for removal of organics efficiently prior to chlorination to ensure higher amount of chlorine availability in the water after chlorination to kill virus and bacteria without increasing the path length and affecting flow rate. In addition to this, the cyst which were previously trapped by the filter media used to leach out if the water quality improves suddenly, e.g. if the level of dissolved salts in water drops down significantly to less than about 50 ppm, then the trapped cysts leached out from the filter. Hence there was a need to develop an improved filter that will reduce the possibility of leaching out the previously trapped cysts due to change in water quality. The above attributes are in addition to the need for the filter to last long enough that the media is required to be rejuvenated/ replaced fewer number of times by the consumer.

The present inventors have experimented with solving the above problems while ensuring that the manufacturing technology should not be too complicated. The present inventors, during the course of this work, have surprisingly found that a unique combination of a carbon block and a specific combination of a fabric filter provides synergistic benefits in cyst removal efficiency.

**Objects of the invention**

It is thus an object of the present invention to provide for a filter that ensures reliable filtration of particulate solids including cysts while giving a high filtration flow rate.

It is another object of the present invention to provide for a filter that ensures reliable filtration of particulate solids including cysts, gives a high filtration flow rate and has a life longer than prior art filters.

It is another object of the present invention to provide for a filter that ensures reliable filtration of particulate solids including cysts, has a long life, provides desired high flow rate under gravity while ensuring a lower cost as compared to prior art filters.

It is another object of the present invention to provide for a filter that ensures reliable filtration of particulate solids including cysts, has a long life, provides desired high flow rate under gravity while ensuring a lower cost as compared to prior art filters and which reduces the probability of leaching of previously trapped particulates/ cysts due to sudden changes in water quality.

**Summary of the Invention**

According to the first aspect of the invention there is provided a filter comprising a carbon block enveloped with spirally wound layer of non-pleated fabric enveloped with spirally wound layer of pleated fabric, wherein the non-pleated fabric has a surface porosity of less than 20%, and a specific liquid permeability less than $2.5 \times 10^{-11}$ m$^2$. and wherein the average pore size of the non-pleated fabric is in the range of 10 to 300 microns. It is particularly preferred that the carbon block is of annular cylindrical shape.

**Detailed description of the invention**

The invention provides for an improved filter that effectively removes particulate solids while ensuring much higher removal efficiency of cysts as compared to filters of the past while the cost of the filter is still low. The types of particulate solids effectively removed by the filter of the invention are coarse particulate solids generally above 3 micrometers in size, microorganisms like cysts, and total suspended solids (TSS) while ensuring a high flow rate of water filtered under gravity head conditions. Chlorine resistant cysts such as *Cryptosporidium parvum* and *Giardia lamblia* which are in the size range of 3 to 6 microns are effectively filtered by the filter of the invention. The removal of cysts is expressed in terms of log removal. Log removal is calculated as follows:

$$\text{Log removal} = \log_{10}\left(\text{Input concentration/output concentration}\right)$$

By gravity head conditions is meant flow of water in the absence of any pressurization. The head of water is usually a few centimeters on the order of 10 to 100 cm, preferably 15 to 50 cm. This translates to pressure of less than 0.1 bar gauge, more preferably less than 0.07 bar gauge, further more preferably less than 0.04 bar gauge and most preferably less than 0.03 bar gauge.

While the filter of the invention is highly suitable for filtration of water under gravity head, the filter could also be used to filter water available under pressure. While the filter of the invention is highly suitable for preparing water that is suitable for potable purposes e.g. drinking water, water for cooking and in making foods and beverages, the present invention is also useful in other household and industrial applications e.g. for cleaning of instruments in the biomedical and laboratory uses, as input water in laundry washing machines and in dishwashing machines among a host of other applications.

The carbon block used in the filter of invention comprises activated carbon particles bound together with a polymeric binder. Activated carbon particles are preferably selected from one or more of bituminous coal, coconut shell, wood and petroleum tar.

Surface area of the activated carbon particles preferably exceeds 500 $m^2/g$, more preferably exceeds 1000 $m^2/g$. Preferably, the activated carbon has a size uniformity co-efficient of less than 2, more preferably less than 1.5, Carbon Tetrachloride number exceeding 50%, more preferably exceeding 60%. The activated carbon preferably has an Iodine number greater than 800, more preferably greater than 1000.

The activated carbon particles are preferably in the size range of 5 to 300 mesh, more preferably in the size range of 16 to 200 mesh and most preferably in the size range of 30 to 100 mesh.

The activated carbon particles in carbon block are bonded to each other using a polymeric binder. Polymeric binders having a Melt Flow Rate (MFR) of less than 5 g/10 minutes are further more preferred. The binder material preferably has an MFR of less than 2 g/10 minutes, more preferably less than 1 g/10 minutes. Optimally the MFR is near zero. The melt-flow rate (MFR) is measured using ASTM D 1238 (ISO 1133) test where the tests are done at 190 °C at 15 kg load.

The amount of polymer collected after a specific interval is weighed and normalized to the number of grams that would have been extruded in 10 minutes: melt flow rate is expressed in grams per reference time.

The binder is preferably a thermoplastic polymer. Suitable examples include ultra high molecular weight polymer preferably polyethylene, polypropylene and combinations thereof, which have these low MFR values. The molecular weight is preferably in the range of $10^6$ to $10^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

Bulk density of the binder used as per the invention is preferably less than or equal to 0.6 $g/cm^3$, more preferably less than or equal to 0.5 $g/cm^3$, and further more preferably less than or equal to 0.25 $g/cm^3$. The binder content can be measured by any known method and is preferably measured by Thermo-gravimetric analysis. The particle size of the polymeric binder is preferably in the range of 20 to 200 micrometers, more preferably in the range of 40 to 60 micrometers.

The weight ratio of polymeric binder to activated carbon particles is preferably in the range of 1:1 to 1:20, more preferably in the range of 1:2 to 1:10.

The carbon block is preferably in the shape of an annular cylinder, a dome, a hemisphere or a frustocone. The annular cylindrical shape is more preferred. It is preferred that the shortest path length across the carbon block i.e. the shortest distance from the inlet surface where the water enters the carbon block to the outlet surface where the water exits the carbon block is from 5 to 50 mm, more preferably 10 to 30 mm.

The carbon block is preferably prepared by a process which comprises the following steps:

(a) the particles of the activated carbon are mixed with the polymeric binder in the presence of water to prepare a moist mixture;
(b) the moist mixture is then added to a mould of desired size;
(c) the mould is then heated to a temperature in the range from 150°C to 350°C; and
(d) the mould is cooled and the carbon block is then demoulded.

Mixing of the activated carbon particles, the polymeric binder, and water is preferably done in vessels which include an agitator, mixer with dulled impeller blades, ribbon blender, rotary mixer, sigma mixer or any other low shear mixer that does not significantly alter the particle size distribution. The mixing is carried out to prepare a uniform mix. The mixing time is preferably from 0.5 to 30 minutes. Preferably, amount of water used in preparing the moist mixture is not more than 4 times the amount of particles, more preferably not more than 3 times the amount of particles. Optimally the amount of water used is from 0.5 to 1.5 times the weight of the carbon particles. The binder is then added to the above mixture and is further mixed. The most preferred mixer is sigma mixer.

The material in the mould before heating is preferably compacted. Compaction pressure may be from 0 to 15 $kg/cm^2$. Suitable compaction pressures are not more than 12 $kg/cm^2$, preferably from 3 to 10 $kg/cm^2$ and most preferably from 4 to 8 $kg/cm^2$. The pressure is preferably applied using either a hydraulic press or a pneumatic press, more preferably a hydraulic press.

The mould is usually made of aluminum, cast iron, steel or any material capable of withstanding temperatures exceeding 400°C. A mould release agent is preferably coated on the inside surface of the mould. The mould release agent is preferably selected from silicone oil or aluminum foil, or Teflon or any other commercially available mould release agent that has little or no adsorption onto the filter medium.

The mould is then heated to a temperature of 150°C to 350°C, preferably in the range of 200°C to 300°C. The mould is kept heated for more than 60 minutes, preferably 90 to 300 minutes. The mould is preferably heated in an oven using a non-convection, forced air or forced inert-gas convection oven.

The mould is then cooled and the moulded filter released from the mould.

The filter of the invention comprises a carbon block which is enveloped with spirally wound layer of non-pleated fabric enveloped with spirally wound layer of pleated fabric. It is preferred that the filter comprises multiple layers of the non-pleated fabric.

The filter configuration as per the invention requires the spirally wound non-pleated layer of fabrics to first overlay the carbon block. By fabric, is meant a woven, knitted or non-woven fabric. The fabric may be made of natural fibres or material or may be of synthetic origin. Preferred fabric is non-woven. Preferred material of the fabric is synthetic preferably polymeric. Suitable polymeric materials of construction of the fabric are cotton, polyester, polypropylene, or nylon. The average pore size of the non-pleated fabric is in the range of 10 to 300 microns, preferably in the range of 25 to 200 microns. The fabric forming the non-pleated layers has a thickness preferably in the range of 1 to 10 mm, more preferably in the range of 2 to 6 mm. The number of spiral windings of non-pleated layers is preferably in the range of 1 to 10, more preferably in the range of 1 to 7. The total thickness of the spirally wound layers of non-pleated fabric is preferably from 1 to 30 mm more preferably 2 to 20 mm. The total surface area of non-pleated layer is preferably from 100 to 2500 cm$^2$ more preferably from 200 to 1500 cm$^2$

The fibers of the non-pleated fabric have zeta potential preferably greater than -40 mV, more preferably greater than -30 mV. Zeta Potential is the electrical potential that exists at the "shear plane" of a particle, which is some small distance from its surface. Zeta Potential is derived from measuring the mobility distribution of a dispersion of charged particles as they are subjected to an electric field. Mobility is defined as the velocity of a particle per electric field unit and is measured by applying an electric field to the dispersion of particles and measuring their average velocity.

The non-pleated fabric has specific liquid permeability less than 2.5 x 10$^{-11}$ m$^2$ at head of 170 mm Water Column. The permeability is defined as the volumetric flow rate of liquid passed through a unit surface area of fabric per unit time at a constant unit differential pressure of water. The intrinsic permeability, also called the specific permeability or absolute permeability of a fabric is a characteristic feature of the fabric structure and represents the void capacity through which a fluid can flow. The specific liquid permeability k is defined by Darcy's law as:

$$q = -\frac{k}{\mu}\frac{dp}{dx}$$

Where q = volumetric flow rate of the fluid in a unit flow area (m/s), k is the specific permeability (m$^2$), dp is the difference in hydraulic pressure (Pa), dx is the fabric thickness (m), $\mu$ is the liquid viscosity (Pa.s)

The non-pleated fabric has surface porosity less than 20%, preferably less than 15% and more preferably less than 12%. Surface porosity is defined as the ratio of voids in the plane cross section of the porous medium to the total area of cross section.

Without wishing to be limited by theory it is believed that fabrics of spirally wound layers of pleated fabric having surface porosity and liquid permeability values in the preferred range provide relatively better cyst removal whilst requiring relatively less number of rejuvenations.

The invention requires that spirally wound layers of pleated fabric envelopes the non-pleated layers. The material of construction of the pleated layers could be different from the non-pleated layers or could be the same, but it is preferred that it is the same. Thus, the preferred aspects of the fabric used for making the pleated layer is similar to that used for making the non-pleated layer. i.e. the fabric may be made of natural fibres or material or may be of synthetic origin. Preferred fabric is non-woven. Preferred material of the fabric is synthetic preferably polymeric. Suitable polymeric materials of construction of the fabric are polyester, polypropylene or nylon. The average pore size of the pleated fabric is preferably in the range of 1 to 400 micrometers, more preferably in the range of 10 to 300 microns, most preferably in the range of 25 to 200 microns. The number of spiral windings of pleated layers is preferably in the range of 1 to 10. more preferably in the range of 1 to 5. The thickness of the pleated layer is preferably from 1 to 10 mm. The total external surface area of pleated layer which forms the outermost surface of the filter is preferably from 100 to 2500 cm$^2$ more preferably from 200 to 1500 cm$^2$.

According to another aspect of the invention there is provided a method of filtering water comprising passing water through a filter of the first aspect of the invention where the water passes first through the pleated fabric, and then through the non-pleated fabric and then through the carbon block.

Thus in a preferred aspect when the carbon block is in an annular cylindrical shape on which is wound layers of non-pleated fabric and further wound with layers of pleated fabric the method of the invention comprises the step of filtering water which flows radially inward, first through the pleated fabric layer, then through the non-pleated fabric and then through the carbon block to exit the filter through the hollow interior cylindrical portion of the carbon block.

According to yet another aspect of the invention there is provided use of a filter of the invention for greater than 3.5 log removal of cysts. Thus, the invention is suited for removal of cysts from contaminated water making it suitable for potable purposes. The filter of the invention also removes greater than 95% of the suspended particles and greater than 90% of organics from the contaminated water when used in filtering water under gravity head conditions. The filter of the invention is useful to filter suspended solids having a particle size in the range of 0.01 to 500 micrometers, more preferably in the range of 0.05 to 100 micrometers. The filter of the invention has been found suitable for filtering up to 1500 litres and in preferred aspects up to 2300 liters of contaminated water under gravity head conditions.

According to yet another aspect of the invention there is provided a gravity filtration device comprising

An inlet upstream of a top chamber and an outlet downstream of a bottom chamber;

The filter according to the present invention detachably attachable to base of said top chamber;

such that liquid fed to the top chamber through said inlet is filtered first through the pleated fabric, then through the non-pleated fabric and then through the carbon block before collecting in the bottom chamber to be dispensed through the out let.

It has been observed that the filter of the invention can be rejuvenated easily and the filter has a long life spanning several such use and rejuvenation cycles. The flow rate of filtered water after each such rejuvenation is consistently high.

These and other objects, advantages, and features of the invention will be readily understood and appreciated by reference to the following non-limiting preferred embodiment of the filter of the invention.

## Brief Description of the Figures

Figure-1 is a schematic diagram of an embodiment of the filter as per the invention.

Figure 2 depicts the flow rate obtained on use of filter of Example 7 over extended usage of the filter.

Figure 3 depicts the removal of turbidity by the filter of Example 7.

Figure 4 depicts the removal of total organic content by the filter of Example 7.

## Detailed Description of the Figures

Figure -1 depicts a filter (F) of the invention. Filter F comprises an annular cylindrical carbon block (CB) at the centre of the filter. The carbon block (CB) is enveloped with spirally wound layers of non-pleated fabric (NP). The spirally would layers of non-pleated fabric is overlaid with spirally would layer of pleated fabric (P).

When in use, water enters the filter in the direction (IN) as shown in figure - 1. The contaminated water may possibly contain suspended particulates and cysts. The water first passes through the pleated layer (P) of fabric. Thereafter the water passes through the spirally wound layers of non-pleated fabric (NP) before it passes through the carbon block (CB) before exiting the filter in the direction (OUT) as shown in figure - 1. The water exiting the filter is found to be substantially free of suspended particles and cysts meeting the desired more than 3.5 log cyst removal criterion.

## Examples 1 to 9:

Experiments were carried out with filters which were constructed with non-pleated layer of fabric, pleated layer of fabric, granular carbon bed, carbon block and various combinations thereof. Further, experiments were carried out with each of the above materials and their combinations at various total path lengths. The details of filters, so constructed are summarized in Table -1.

**Table - 1**

| Example | Filter construction | Path Length of fabric (mm) | Path Length of carbon (mm) | Total Path length, mm |
|---|---|---|---|---|
| 1 | Pleated layer (1)+non-pleated (6) | 10.9 | - | 10.9 |

(continued)

| Example | Filter construction | Path Length of fabric (mm) | Path Length of carbon (mm) | Total Path length, mm |
|---|---|---|---|---|
| 2 | Pleated layer(1)+non-pleated (18) | 30.1 | - | 30.1 |
| 3 | Carbon block | - | 15.0 | 15.0 |
| 4 | Carbon block | - | 40.0 | 40.0 |
| 5 | Pleated layer(1)+bed of granular carbon | 1.3 | 15.0 | 16.3 |
| 6 | Pleated (1) + non-pleated (6) + bed of granular carbon | 10.9 | 15.0 | 25.9 |
| 7 | Pleated (1) + non-pleated (6) + carbon block | 10.9 | 15.0 | 25.9 |
| 7A | Pleated (1) + non-pleated (2) + carbon block | 5.7 | 25.0 | 30.7 |
| 8 | Pleated (1) + non-pleated (6) + carbon block | 13.3 | 15.0 | 28.3 |
| 9 | Pleated (1) + non-pleated (6) + carbon block | 10.9 | 15.0 | 25.9 |
| 9A | Same as 9 | 10.9 | 15.0 | 25.9 |

The number in the bracket in Table (1) is the number of windings of the respective fabrics.

The specification of the fabric used for pleated layer is given in Table -2.

**Table - 2**

| Parameter | Pleated fabric |
|---|---|
| GSM | 500 |
| Thickness (mm) | 1.5-1.7 |
| Air permeability (at 20 mm Water Column) ($l/dm^2.min$) | 130 |
| Bursting strength ($kgf/cm^2$) | 30 |
| Tensile strength ($kgf/cm^2$) | 100 |

The specification of the fabric used as non-pleated layer in Examples 1, 2, 6, 7, and 9 is given in Table - 3.

**Table - 3**

| Parameter | Non pleated Fabric |
|---|---|
| GSM | 620 |
| Thickness (mm) | 1.6-2 |
| Air permeability (at 20 mm Water Column) ($l/dm^2$ .min) | 110 |
| Bursting strength ($kgf/cm^2$) | 35 |
| Tensile strength ($kgf/cm^2$) | 100 |
| Specific liquid permeability ($m^2$) at 170 mm Water Column | $1.7\text{-}2.2 \times 10^{-11}$ |
| Surface Porosity (%) | 7 |

The specification of the non-pleated layer used in Example 8 is given in Table - 4.

**Table - 4**

| Parameter | Non pleated Fabric |
|---|---|
| GSM | 750 |
| Thickness (mm) | 2 |
| Air permeability (at 20 mm Water Column) (l/dm$^2$ .min) | 160 |
| Bursting strength (kgf/cm$^2$) | 40 |
| Tensile strength (kgf/cm$^2$) | 110 |
| Specific liquid permeability (m$^2$) at 170 mm Water Column | 1.2 x 10$^{-11}$ |
| Surface Porosity (%) | 12.6 |

The specification of the carbon used is given in Table - 5.

**Table - 5**

| Example | Carbon form and shape | Size of carbon (mesh) | Outer diameter of carbon bed or block (mm) | Height of loose bed or block (mm) |
|---|---|---|---|---|
| 3 | Block, Annular | 30 to 60 | 35 | 55 |
| 4 | Block, Dome | 30 to 60 | 120 | 60 |
| 5 | Loose granules, Annular | 30 to 60 | 35 | 55 |
| 6 | Loose granules, Annular | 30 to 60 | 35 | 55 |
| 7 | Block, Annular | 30 to 60 | 35 | 55 |
| 7A | Block, Annular | 30 to 60 | 70 | 55 |
| 8 | Block, Annular | 30 to 60 | 35 | 55 |
| 9 | Block, Annular | 60 to 90 | 35 | 55 |

A Model Feed Water 1 (as per NSF 53 protocol) was prepared as shown below:

Calcium carbonate: 100 mg/liter

Calcium chloride: 200 mg/L

pH: 6.5 to 8.5

Turbidity: less than 1 NTU

Additionally the test water was loaded with cyst (Cryptosporidium oocyst) at a concentration of 50000/liter (as added). This test water was filtered through all the filter constructions of Table 1 (Examples - 1 to 9) at a peak flow rate of 250 ml/minute. In Examples 1 to 8, the flow direction was such that the water was first filtered through pleated layer, then through non-pleated layer and then through carbon block, each if present. In Example 9A, the flow of water was reversed with respect to Example -9 i.e the water flowed first through the carbon block, then through the non-pleated layer and then through the pleated layer. The log removal efficiency of the filters is summarized in Table - 6.

**Table - 6**

| Example | Filter construction | Path Length of fabric (mm) | Path Length of carbon (mm) | Total Path length, mm | Log removal of cyst |
|---|---|---|---|---|---|
| 1 | Pleated layer (1) +non-pleated (6) | 10.9 | - | 10.9 | 1.80 |
| 2 | Pleated layer(1) +non-pleated (18) | 30.1 | - | 30.1 | 1.99 |
| 3 | Carbon block | - | 15.0 | 15.0 | 0.69 |
| 4 | Carbon block | - | 40.0 | 40.0 | 3.30 |
| 5 | Pleated layer(1) +bed of granular carbon | 1.3 | 15.0 | 16.3 | 0.92 |
| 6 | Pleated (1) + non-pleated (6) + bed of granular carbon | 10.9 | 15.0 | 25.9 | 1.82 |
| 7 | Pleated (1) + non-pleated (6) + carbon block | 10.9 | 15.0 | 25.9 | 4.30 |
| 7A | Pleated (1) + non-pleated (2) + carbon block | 5.7 | 30.0 | 35.7 | 4.5 |
| 8 | Pleated (1) + non-pleated (6) + carbon block | 13.3 | 15.0 | 28.3 | 3.93 |
| 9 | Pleated (1) + non-pleated (6) + carbon block | 10.9 | 15.0 | 25.9 | 4.56 |
| 9A | Pleated (1) + non-pleated (6) + carbon block (reverse flow of water) | 10.9 | 15.0 | 25.9 | * |
| * The removal of cyst was similar to Example - 9 except that the filter clogged much earlier as compared to Example -9. | | | | | |

The data in Table- 6 indicates filters prepared as per the invention (Examples 7, 8 and 9) provide for synergistic improvement in cyst removal as compared to a filter made of carbon block alone or a filter made of a combination of pleated fabric and non-pleated fabric.

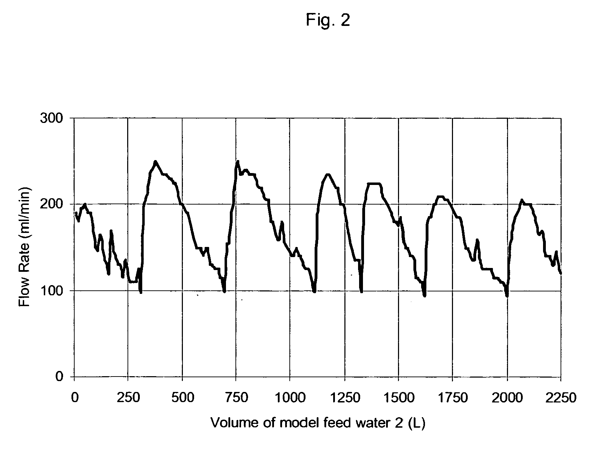

As can be seen in Figure 2, use of a filter of the invention (Example 7) over extended usage of the filter (up to 2250 litres), gives very good flow rate of 100 to 250 ml/minute with only 6 interventions. This filter also gives very good removal of particulates as is evident from Figure - 3 where the turbidity of the output water is consistently lower than 0.1 NTU for most of the life of the filter. The total organic content removal (see Example - 4) by the filter of the invention (Example 7) is also very good at greater than 90% over the entire life of the filter.

**Example 10:**

Experiments were carried out with filters which were constructed according to Example 7 (Filter A) and Example 9 (Filter B) at different points of the life to determine the flow profile and removal of suspended particles, total organic content and cysts. The external surface area of the pleated fabric was 500 $cm^2$.

To study the flow profile and removal of suspended particles and total organic content, a Model feed water 2 having a tubidity of about 15 NTU, total suspended solids of around 15 ppm, total organic loading of around 2.5 ppm and total dissolved salts of around 1500 ppm, pH of around 8.5 was prepared. This was done by adding Arizona fine test dust of particle size 0.5-200 micrometer, supplied by Powder Technology INC, USA, Humic acid, Sodium bicarbonate and calcium chloride to distilled water. The experiment was conducted by passing the test water through the filter maintaining a constant water head of 15 cm.

The experiment was carried out for a large volume of water of about 2300 liters of feed water. The flow rate of filtered water was measured using a measuring cylinder and a stop watch. When the flow rate of filtered water reduced below 100 ml/minute, the filter was rejuvenated by washing under a jet of water and was reused to continue the experiment. The turbidity and the total organic content of the water were measured as described below.

The turbidity of the water was measured using a Merck Turbiquant 1500T turbidity meter. About 20 ml of a representative sample of the water was used for the measurement. The total organic content was measured using a UV spectrophotometer by measuring absorbance at 254 nm. About 5 ml of a representative sample of the water was used for the measurement. The % removal was calculated as follows:

$$\text{\% (Turbidity or Total organic content removal)} = 1 - (\text{Turbidity or total organic content of filtered water} / \text{Turbidity or total organic content of feed water}) \times 100$$

The cyst (Cryptosporidium oocyst) removal efficacy of Filter A and Filter B was evaluated after 0 liters (beginning of the lifetime or fresh filter), 750 liters, 1500 liters and 2300 liters of model test water 2 passed through Filters A and B. To determine the cyst removal efficiency, experiments were carried using model feed water 1. The log cyst removal efficiency of the filters at different time points is summarized in Table - 7.

**Table - 7**

| Liters of Model feed Water - 2 passed | Log removal of cyst using Filter A | Log removal of cyst using Filter B |
|---|---|---|
| 0 | 4.09 | 4.56 |
| 750 | 3.67 | 4.28 |
| 1500 | 3.77 | 4.62 |
| 2300 | 4.44 | 4.39 |

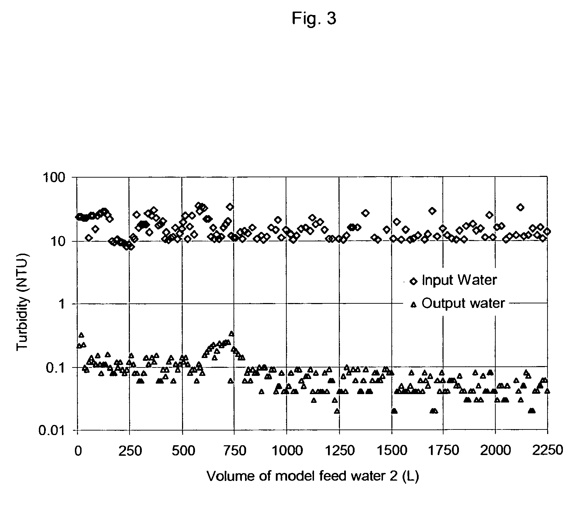

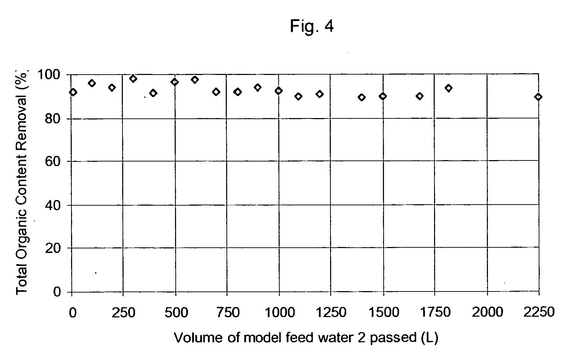

The data in Figures 2, 3 and 4 summarizes the behavior of the flow rate of filtered water, % turbidity removal and the % total organics removal over a period of time of usage of Filter A. From Figure 2, it is clear that the filter of the invention lasts the estimated life of 2300 liters of water. The filter regains its flow rate after every rejuvenation cycle. From Figure 3, it is clear that the of the invention delivers output water with turbidity < 0.2 NTU for an input turbidity of 15-20 NTU over the entire estimated life of the filter. From Figure 4, it is clear that the filter of the invention removes > 90% removal of total organics for the entire estimated life of the filter.

**Example 11**

The leaching of previously trapped cysts due to sudden reduction in the level of total dissolved salts was studied.

Example 11A: Filtration with High TDS model test water

Two filters C and D which are similar to Filter A (as described in Example 10) were used. 2300 liters of Model feed water 2 (High TDS) was passed through these filters and then the cyst removal efficacy of Filters C and D was evaluated by passing 8 liters of model test water 1 containing 50,000/L of cysts (Cryptosporidium oocyst, Input 1) through the filters. The cyst removal values are mentioned in Table - 8.

Example 11 B: Filtration with low TDS water

Through filter C which has been taken through Example 11 A, 8 liters of distilled water (pH ~ 7 and total dissolved salts < 2 ppm) containing 50,000 cysts/L (Cryptosporidium oocyst, Input 2) was passed and the output water was collected for analysis. Through filter D which has been taken through Example 11A, 8 liters of distilled water (pH ~ 7 and total dissolved salt < 2ppm) was passed and the output water was collected for analysis. The overall log removal was calculated as follows:

$$\text{Overall log removal} = \text{Log}_{10} [(\text{Input Example 11A} + \text{Input Example 11B})/(\text{Output Example 11A} + \text{Output Example 11B})]$$

The overall log removal of cysts for filters C and D is mentioned as Cyst log removal for Example 11 B in Table - 8.

**Table - 8**

| Filter | Liters of model feed water - 2 passed (liters) | Cyst log removal Example 11A | Cyst log removal Example 11B |
|---|---|---|---|
| C | 2300 | 4.44 | 4.21 |
| D | 2300 | 4.41 | 4.41 |

Table - 8 clearly shows that in spite of sudden lowering in the level of total dissolved salts in the feed water by using distilled water, the filters show more than 4 log removal of cysts at the end of filter life, both, in the presence and absence of cysts in distilled water.

Effect of characteristics of the fabric of the non-pleated filter

*Preparation of Test Water IV(with fluorescent polystyrene microspheres)*

Five L solution of fluorescent polystyrene microspheres of 3 micron size (obtained from Fluoresbrite) was added to 500 mL of deionized water under stirring and stored at 4 degree C temperature to obtain a stock solution. Test water IV was prepared by adding 30 mL of stock solution into 10 L water containing 2 g calcium chloride and 1 g of sodium bicarbonate. The microspheres simulated cysts.

*Determination of microsphere counts in water sample*

Water sample was diluted 5 times with deionized water. 5 mL of diluted water was filtered through 0.4 micron pore size membrane, under vacuum. The membrane was kept on glass slide and numbers of microspheres were visually counted using Olympus BX40 microscope.

Experiments for removal of test microspheres and in some cases for removal of cysts were carried out with fabrics having different characteristics of the fabric of non-pleated filter, and the results are tabulated below. Data for Examples 7 and 8 is reproduced for convenience. Examples 14 and 15 are comparative examples.

**Table - 9**

| Example | Non-pleated fabric characteristics | | Log removal of microspheres | Log removal of cysts |
|---|---|---|---|---|
| | Specific liquid permeability ($m^2$) at 170 mm Water Column | Surface porosity (%) | | |
| 7 | $1.7 \times 10^{-11}$ | 7 | 2.1 | 4.3 |
| 8 | $1.2 \times 10^{-11}$ | 12.6 | 1.9 | 3.9 |
| 12 | $1.7 \times 10^{-11}$ | 5.4 | 2.4 | 4.4 |
| 13 | $8.5 \times 10^{-12}$ | 4.64 | 2.1 | 4.1 |
| 14 | $1.8 \times 10^{-11}$ | 23 | 1.53 | Not measured |
| 15 | $2.7 \times 10^{-11}$ | 7.7 | 1.52 | Not measured |

The data indicate that non-pleated fabrics having surface porosity less than 20% and specific liquid permeability less than $2 \times 10^{-11}$ $m^2$ are relatively more efficacious as indicated by results on log removal of microspheres.

Effect of presence of organics on Chlorine demand

Required amount of 1% Calcium hypochlorite was added to 5L of water free of organics to obtain water containing 5 ppm of chlorine dissolved in it (Example 16). Water containing 5 ppm of Humic acid was passed through a filter as described in Example 1 and to the filtered water required amount of 1% Calcium hypochlorite was added to obtain water containing 5 ppm of chlorine dissolved in it (Example 17). In another example water containing 5 ppm of Humic acid was passed through a filter as described in Example 9 and to the filtered water, required amount of 1% Calcium hypochlorite was added to obtain water containing 5 ppm of chlorine in dissolved in it (Example 18). The chlorine content was measured up to 4 hours and the chlorine demand was calculated by subtracting the chlorine level in presence of organics from chlorine level in absence of organics and the results are presented in Table 10.

| **Table -10** Experiment | Available chlorine in ppm | | | | | |
|---|---|---|---|---|---|---|
| | 5 min | 30 min | 1 hr | 2 hrs | 3 hrs | 4 hrs |
| Example 16 | 5.52 | 5.52 | 5.52 | 5.52 | 5.38 | 5.38 |
| Example 17 | 4.17 | 3.66 | 2.67 | 2.41 | 2.00 | 1.36 |
| Chlorine demand (ppm) | 1.35 | 1.86 | 2.85 | 3.11 | 3.38 | 4.02 |
| Example 18 | 5.37 | 5.33 | 5.33 | 5.29 | 5.09 | 4.93 |
| Chlorine demand (ppm) | 0.15 | 0.19 | 0.19 | 0.23 | 0.29 | 0.45 |

The data presented in Table 10 shows that when organics are present in water the chlorine demand is higher and eliminating the organics by filtering through a filter according to the invention before introducing biocide e.g chlorine, significantly reduces the chlorine deman

**Claims**

1. A filter comprising a carbon block enveloped with spirally wound layer of non-pleated fabric enveloped with spirally wound layer of pleated fabric, wherein the nonpleated fabric has a surface porosity of less than 20%, and a specific liquid permeability less than 2.5 x $10^{-11}$ $m^2$, and wherein the average pore size of the non-pleated fabric is in the range of 10 to 300 microns.

2. A filter as claimed in claim 1 wherein said carbon block is of annular cylindrical shape.

3. A filter as claimed as claims 1 or 2 wherein the carbon block comprises activated carbon particles bound together with a polymeric binder having a melt flow rate of less tan 5 gram/10 minutes.

4. A filter as claimed in claim 3 wherein said activated carbon particles are in the size range of 5 to 300 mesh.

5. A filter as claimed in any one of the preceding claims wherein the shortest path length across the carbon block is from 5 to 50 mm.

6. A filter as claimed in claim 1 wherein the fabric is non-woven fabric.

7. A filter as claimed in any one of the preceding claims wherein said fabric is made of cotton, polyester, polypropylene, or nylon.

8. A filter as claimed in any one of the preceding claims wherein the total thickness of the spirally wound layers of non-pleated fabric is from 1 to 30 mm.

9. A filter as claimed in any one of the preceding claims wherein the total external surface area of filter is from 100 to 2500 $cm^2$.

10. A gravity filtration device comprising

(i) an inlet upstream of a top chamber and an outlet downstream of a bottom chamber;
(ii) a filter as claimed in any one of the preceding claims detachably attachable to base of said top chamber;

such that liquid fed to the top chamber through said inlet is filtered first through the pleated fabric, then through the non-pleated fabric and then through the carbon block before collecting in the bottom chamber to be dispensed through the outlet.

11. A method of filtering water comprising passing water through a filter as claimed in any one of the preceding claims 1 to 9 such that water passes first through said pleated fabric, and then through said non-pleated fabric and then through said carbon block.

12. Use of a filter as claimed in any one of the preceding claims 1 to 9 for greater than 3.5 log removal of cysts from water.

**Patentansprüche**

1. Filter, der einen Kohleblock aufweist, der von einer spiralförmig gewickelten Schicht aus faltenfreiem Textilmaterial umhüllt ist, die von einer spiralförmig gewickelten Schicht aus gefälteltem Textilmaterial umgeben ist, wobei das faltenfreie Textilmaterial eine Porosität der Oberfläche von weniger als 20 % und eine spezifische Flüssigkeitsdurchlässigkeit von weniger als $2,5 \times 10^{-11}$ m$^2$ aufweist und wobei die mittlere Porengröße des faltenfreien Textilmaterials im Bereich von 10 bis 300 $\mu$m liegt.

2. Filter nach Anspruch 1,
wobei der Kohleblock eine Hohlzylinderform hat.

3. Filter nach Anspruch 1 oder 2,
wobei der Kohleblock Aktivkohlepartikel aufweist, die mit einem polymeren Bindemittel miteinander verbunden sind, das eine Schmelzfließrate von weniger als 5 g/10 min aufweist.

4. Filter nach Anspruch 3,
wobei die Aktivkohlepartikel im Größenbereich von 5 bis 300 mesh liegen.

5. Filter nach einem der vorstehenden Ansprüche,
wobei die kürzeste Weglänge entlang des Kohleblocks 5 bis 50 mm beträgt.

6. Filter nach Anspruch 1,
wobei das Textilmaterial Vlies ist.

7. Filter nach einem der vorstehenden Ansprüche,
wobei das Textilmaterial aus Baumwolle, Polyester, Polypropylen oder Nylon hergestellt ist.

8. Filter nach einem der vorstehenden Ansprüche,
wobei die Gesamtdicke der spiralförmig gewickelten Schichten aus faltenfreiem Textilmaterial 1 bis 30 mm beträgt.

9. Filter nach einem der vorstehenden Ansprüche,
wobei die gesamte äußere Oberfläche des Filters 100 bis 2500 cm$^2$ beträgt.

10. Schwerkraftfiltervorrichtung, die Folgendes aufweist:

(i) einen Einlass stromaufwärts einer oberen Kammer und einen Auslass stromabwärts einer unteren Kammer;
(ii) einen Filter nach einem der vorstehenden Ansprüche, der lösbar an die Unterseite der oberen Kammer angebracht ist;

so dass die Flüssigkeit, die der oberen Kammer durch den Einlass zugeführt wird, zuerst durch das gefältelte Textilmaterial, dann durch das faltenfreie Textilmaterial und dann durch den Kohleblock filtriert wird, bevor sie am Boden der Kammer aufgefangen wird, um durch den Auslass abgegeben zu werden.

11. Verfahren zum Filtrieren von Wasser, das das Leiten von Wasser durch einen Filter nach einem der vorstehenden Ansprüche 1 bis 9 aufweist, so dass das Wasser zuerst durch das gefältelte Textilmaterial und dann durch das faltenfreie Textilmaterial und danach durch den Kohleblock strömt.

12. Verwendung eines Filters nach einem der vorstehenden Ansprüche 1 bis 9 für die mehr als 3,5 log Entfernung von Zysten aus Wasser.


**Revendications**

1. Filtre comprenant un bloc de carbone enveloppé avec une couche enroulée en spirale de tissu non plissé enveloppée avec une couche enroulée en spirale de tissu plissé, dans lequel le tissu non plissé a une porosité de surface inférieure à 20 % et une perméabilité spécifique aux liquides inférieure à 2,5 x $10^{-11}$ $m^2$, et dans lequel le diamètre de pores moyen du tissu non plissé est compris dans la plage allant de 10 à 300 $\mu$m.

2. Filtre selon la revendication 1, dans lequel ledit bloc de carbone est de forme cylindrique annulaire.

3. Filtre selon la revendication 1 ou 2, dans lequel le bloc de carbone comprend des particules de carbone activées liées ensemble avec un liant polymère ayant une vitesse de fluage inférieure à 5 g/10 minutes.

4. Filtre selon la revendication 3, dans lequel lesdites particules de carbone activées sont dans la plage de taille de 5 à 300 mesh.

5. Filtre selon l'une quelconque des revendications précédentes, dans lequel la longueur de trajet la plus courte dans le bloc de carbone est de 5 à 50 mm.

6. Filtre selon la revendication 1, dans lequel le tissu est un tissu non tissé.

7. Filtre selon l'une quelconque des revendications précédentes, dans lequel ledit tissu est en coton, polyester, polypropylène ou nylon.

8. Filtre selon, l'une quelconque des revendications précédentes, dans lequel l'épaisseur totale des couches enroulées en spirale de tissu non plissé est de 1 à 30 mm.

9. Filtre selon l'une quelconque des revendications précédentes, dans lequel la surface externe totale du filtre est de 100 à 2500 $cm^2$.

10. Dispositif de filtration par gravité comprenant

    (i) une entrée en amont d'une chambre supérieure et une sortie en aval d'une chambre inférieure ;
    (ii) un filtre selon l'une quelconque des revendications précédentes attachable de manière détachable à la base de ladite chambre supérieure;

    de sorte que le liquide alimenté dans la chambre supérieure par le biais de ladite entrée soit filtré tout d'abord à travers le tissu plissé, puis à travers le tissu non plissé et ensuite à travers le bloc de carbone avant d'être recueilli dans la chambre inférieure pour être distribué par la sortie.

11. Procédé de filtration d'eau comprenant le passage de l'eau à travers un filtre selon l'une quelconque des revendications précédentes 1 à 9, de sorte que l'eau passe tout d'abord à travers ledit tissu plissé, puis à travers ledit tissu non plissé, et ensuite à travers ledit bloc de carbone.

12. Utilisation d'un filtre selon l'une quelconque des revendications précédentes 1 à 9, pour une élimination de kystes de l'eau de plus de 3,5 log.

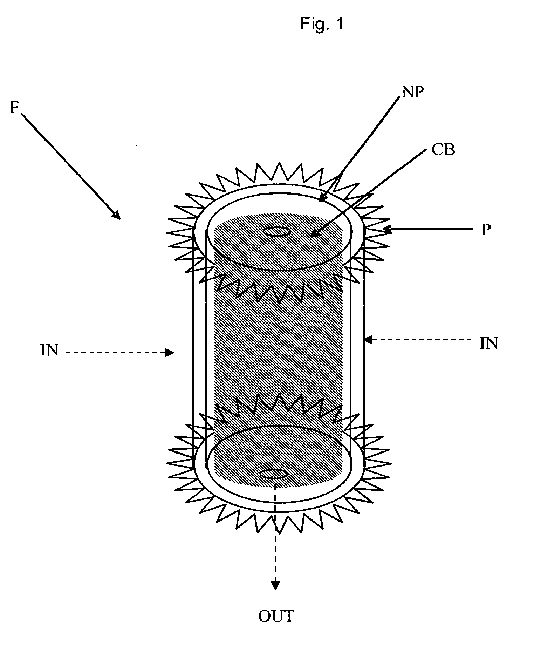

Fig. 1

Fig. 2

Fig. 3

Fig. 4

**EP 2 384 234 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090045106 A
- WO 2004000732 A
- WO 2008028734 A